# EUROPÄISCHE PATENTANMELDUNG

(11) **EP 4 574 795 A1**
(43) Veröffentlichungstag der Anmeldung: **25.06.2025**
(21) Anmeldenummer: 24222625.6
(22) Anmeldetag: 20.12.2024
(51) Int. Cl.: C04B 28/04, C04B 28/08, C04B 28/16, C04B 111/00, C04B 111/60

(54) **ZEMENTMISCHUNG**

(30) Priorität: 21.12.2023 AT 510472023
(71) Anmelder: ALAS Center of Competence s.r.o., 841 01 Bratislava (SK)
(72) Erfinder: Schinkinger, Thomas, 4072 Alkoven (AT)
(74) Vertreter: Schögl, Daniela

(57) **Zusammenfassung**

Die Erfindung betrifft eine Zementmischung umfassend Portlandzementklinker und Konverterschlacke und/oder Elektroofenschlacke, wobei gemahlener Portlandzementklinker in einer Menge von mindestens 20 Masse-% und gemahlene Konverterschlacke und/oder Elektroofenschlacke in einer Menge von mindestens 5 Masse-% enthalten ist, und die vorkonditionierte und konditionierte gemahlene Konverterschlacke und/oder Elektroofenschlacke eine Partikelgrößenverteilung gekennzeichnet durch einen Partikeldurchmesser D₁₀ zwischen 0,5 µm und 30 µm und einen Partikeldurchmesser D₈₀ zwischen 5 µm und 100 µm aufweist, deren Verwendung sowie eine Verfahren zu deren Herstellung.

## Beschreibung

Die Erfindung betrifft eine Zementmischung umfassend Portlandzementklinker und Konverterschlacke und/oder Elektroofenschlacke, deren Verwendung sowie ein Verfahren zur Herstellung der Zementmischung.

Beton wird weltweit als Baustoff verwendet. Zusätzlich zur Gesteinskörnung als Zuschlagstoff und Wasser enthält dieser meist Portlandzementklinker als hydraulisches Bindemittel. Durch die Zugabe von unterschiedlichen Zusatzstoffen zu Portlandzementklinker können Zementmischungen unterschiedlicher Eigenschaften hergestellt werden.

Beispielsweise enthalten handelsübliche Zemente neben Zementklinker als Hauptbestandteil auch Hüttensand, wobei Hochofenzement (CEM III) 36 bis 95 Masse-% Hüttensand, Portlandhüttenzement (CEM II/A-S, CEM II/B-S) mit 6 bis 35 Masse-% Hüttensand enthält und Portlandkompositzement (CEM II/A-M und CEM II/B-M) nach DIN EN 197-1 aus den Hauptbestandteilen mindestens 65 Masse-% Zementklinker, sowie Hüttensand, Puzzolan, Flugasche, gebrannter Schiefer und/oder Kalkstein sowie bis zu 5 Masse-% anderen Nebenbestandteilen besteht. Aufgrund ihres im Vergleich mit Portlandzement CEM I geringeren Anteils an Zementklinker spielen sie eine wichtige Rolle bei der Dekarbonisierung von Zement und Beton.

Durch den Ersatz von Portlandzementklinker wird versucht die spezifischen Emissionen von CO₂ bei der Herstellung von Zement zu verringern. Bei der Herstellung einer Tonne Portlandzementklinker werden ca. 900 kg CO₂ durch Kalzinierung der Ausgangsmaterialien und bei der Verbrennung der Brennstoffe im Drehrohrofen emittiert.

Während die bei der Roheisenerzeugung anfallende Hochofenschlacke (HOS) zum großen Teil zu Hüttensand granuliert wird und in fein aufgemahlener Form aufgrund der latent-hydraulischen Eigenschaften als Zementkomponente bereits vielfach Verwendung findet, werden die im Stahlherstellungsprozess anfallenden Stahlwerksschlacken, insbesondere Konverterschlacke, welche auch LD-Schlacke bzw. Linz-Donawitz-Schlacke bezeichnet wird, bislang in der Praxis noch nicht als Zusatzstoff im Zement eingesetzt.

Hüttensand hat latent-hydraulische Eigenschaften, wohingegen Konverterschlacke ohne entsprechende Vorkonditionierung und Konditionierung keine nennenswerten latent-hydraulischen Eigenschaften aufweist und somit keinen Beitrag zur Festigkeitsentwicklung im Beton leistet.

In Deutschland fallen jährlich ca. 6 Mio. t Stahlwerksschlacken an. Davon sind 3,5 Mio. t Konverterschlacke und 1,8 Mio. t Elektroofenschlacke.

Die Dauerhaftigkeit und die Festigkeit, insbesondere Druckfestigkeit, von Beton sind vom Anteil der ultrafeinen Zusatzstoffe in der Zementmischung abhängig und sind umso besser je höher der Gehalt an ultrafeinen Zusatzstoffen ist. Die Herstellung ultrafeiner Zusatzstoffe ist jedoch aufgrund des erhöhten Mahlaufwands teuer und somit nur bedingt anwendbar. Weiters steigt durch die Verwendung von ultrafeinem Zusatzstoff in der Zementmischung der Wasserbedarf.

Die EP572076B1 beschreibt eine Zementzusammensetzung mit gemahlenem Zementklinkermaterial, gemahlener, granulierter Hochofenschlacke und pulverisierter und luftgekühlter Stahlschlacke mit einer Teilchengröße von höchstens 0,2 mm. Die Ausgangsmaterialien werden vermischt, bei Bedarf gekühlt, und pulverisiert, um eine hydraulisch aushärtbare Zementzusammensetzung zu erhalten.

Die WO2021197866A1 offenbart die Verwendung von Konverterschlacke, die mit einer puzzolanischen Silikaquelle, bevorzugt gemahlenem Hüttensand, einer Sulfatquelle, bevorzugt Claciumsulfat-Anhydrit als Aktivator, und gegebenenfalls außerdem mit Portlandzement kombiniert wird. Die Partikelgröße der Konverterschlacke ist kleiner 150 µm.

Es wird bisher aber nicht nur die Option der Mahlung und Zumischung der Konverterschlacke zu anderen Zementbestandteilen, wie Portlandzementklinker und Hüttensand, berücksichtigt, sondern auch die Option der Transformation der flüssigen Schlacke zu Klinker.

Daher ist es eine Aufgabe der vorliegenden Erfindung die oben genannten Nachteile zu überwinden. Der vorliegenden Erfindung liegt insbesondere die Aufgabe zu Grunde, eine Zementmischung sowie ein Verfahren anzugeben, die eine resourcenschonende Herstellung von Zementmischungen ermöglicht, wodurch gleichzeitig CO₂-Emissionen verringert werden.

Die Aufgabe der Erfindung wird jeweils eigenständig durch eine Zementmischung umfassend Portlandzementklinker und Konverterschlacke und/oder Elektroofenschlacke, deren Verwendung sowie einem Verfahren zur Herstellung der Zementmischung gelöst.

In der Zementmischung ist gemahlener Portlandzementklinker in einer Menge von mindestens 20 Masse-% und gemahlene Konverterschlacke und/oder Elektroofenschlacke in einer Menge von mindestens 5 Masse-% enthalten, wobei die vorkonditionierte und konditionierte gemahlene Konverterschlacke und/oder Elektroofenschlacke eine Partikelgrößenverteilung gekennzeichnet durch einen Partikeldurchmesser D₁₀ zwischen 0,5 µm und 30 µm und einen Partikeldurchmesser D₈₀ zwischen 5 µm und 100 µm aufweist. Neben den Mengenanteilen der Ausgangsstoffe der Zementmischung ist die Korngrößenverteilung ein wichtiger Parameter für die Bindemitteleigenschaften. Überraschenderweise wurde festgestellt, dass eine bestimmte Verteilung der Partikelgröße der Konverterschlacke und/oder Elektroofenschlacke Dauerhaftigkeits- und Druckfestigkeitswerte ergibt, die sonst nur durch Zugabe von weiteren Additiven oder durch einen wesentlich höheren Anteil von gemahlenem Portlandzementklinker erreichbar sind. Der spezifische D₁₀-Bereich von 0,5 µm und 30 µm und/oder der spezifische D₈₀-Bereich von 5 µm und 100 µm ergeben eine bestimmungsgemäße Festigkeit des Betons in der Anwendung, wobei gleichzeitig der CO₂-Fußabdruck der erfindungsgemäßen Zementmischung um bis zu 80 % im Vergleich zu einem handelsüblichen CEM I verringert werden kann.

Durch den Einsatz der erfindungsgemäßen Zementmischung kann die bei der Zementherstellung emittierte CO₂ Menge im Vergleich zu handelsüblichen Zementen um bis zu 80 % verringert werden.

Mit der erfindungsgemäßen Zementmischung kann eine einfache und zuverlässige Herstellung von Beton mit stabiler Qualität erreicht werden.

Nicht der Blaine-Wert ist die ausschlaggebende Größe zur Beschreibung der Feinheit vielmehr ist die Korngrößenverteilung für die Bindemitteleigenschaften wichtig.

Mit der erfindungsgemäßen Zementmischung kann ein hydraulisches Bindemittel mit hoher Leistung in Bezug auf die Dauerhaftigkeit und Festigkeit von Beton bereitgestellt werden.

Durch die Bereitstellung der Zementmischung entfällt die Notwendigkeit herkömmlichen Zement in der Betonmischanlage mit Zusatzstoffen zu mischen. Neben den vorteilhaften Eigenschaften der Zementmischung in Bezug auf die Qualität des hergestellten Betons profitiert der Anwender von einer gleichbleibenden Qualität der Zementmischung und somit des damit hergestellten Betons und einer einfachen Handhabung der Zementmischung.

Der teilweise Ersatz des energieintensiven und stark CO₂ belasteten Klinkers durch industrielle Nebenprodukte wie Konverterschlacke oder Elektroofenschlacke hat nicht nur ökologische Vorteile, sondern bietet auch die Möglichkeit, Beton mit verbesserten Eigenschaften, einschließlich der Dauerhaftigkeit, herzustellen.

Vorzugsweise weist gemahlener Portlandzementklinker eine Partikelgrößenverteilung gekennzeichnet durch einen Partikeldurchmesser D₁₀ zwischen 0,5 µm und 10 µm und einen Partikeldurchmesser D₈₀ zwischen 4 µm und 80 µm auf, wodurch die Betoneigenschaften weiter verbessert werden können.

Es erweist sich von Vorteil, wenn bei der Vorkonditionierung die Korngröße des Portlandzementklinkers vor der Mahlung auf die Korngrößenverteilung der Konverterschlackekörner abgestimmt wird, weil dadurch die Werte in Bezug auf die Druckfestigkeit einer Betonmischung mit der erfindungsgemäßen Zementmischung verbessert werden.

Die separate Vorkonditionierung der Rohstoffe erfolgt mittels Grobzerkleinerung und Korngrößentrennung und zielt darauf ab, die Partikelgröße der einzelnen Rohstoffe so vorzubereiten, dass mit der nachfolgenden Mahlung und Sichtung spezifische Produkteigenschaften erreicht werden können, wozu es notwendig ist die maximale Korngröße der Konverterschlacke und/oder Elektroofenschlacke geringer zu halten als für Hauptbestandteile mit geringerem Widerstand gegen Zerkleinerung.

Die Mahlbarkeit von Konverterschlacke und Portlandzementklinker ist verschieden. Daher liegen die Stoffe in der Zementmischung nach dem Mahlvorgang, selbst wenn sie vorher gemeinsam vermischt werden in unterschiedlichen Feinheiten vor. Die Feinheit der Ausgangsstoffe wirkt sich auf die Bindemitteleigenschaften aus.

Die Gesamtendfeinheit der Zementzusammensetzung kann einen Blaine-Wert von 3000 cm²/g bis 30000 cm²/g aufweisen, weil dadurch eine Mahlfeinheit im mittleren feinen und sehr feinen Bereich erreicht wird, und dadurch die Zementmischung rasch erhärtet. Mahlfeinheit und Korngrößenverteilung sind wichtige Zementeigenschaften, die die Festigkeitsentwicklung des erhärtenden Zements und den Wasseranspruch bei der Betonherstellung beeinflussen.

Von Vorteil kann sich erweisen, dass die gemahlene Konverterschlacke in der Zementmischung eine Endfeinheit einen Blaine-Wert von 2500 cm²/g bis 25000 cm²/g aufweist, wodurch einerseits eine fein gemahlene Konverterschlacke hergestellt wird und andererseits der technische und monetäre Aufwand für das Mahlen in einem wirtschaftlichen Rahmen bleibt.

Der gemahlene Portlandzementklinker in der Zementmischung kann eine Endfeinheit mit einem Blaine-Wert von 3000 cm²/g bis 30000 cm²/g aufweisen, wodurch die leichter mahlbare Komponente der Zementmischung feiner gemahlen ist.

Vorzugsweise ist zumindest ein Sulfatträger in einer Menge von 1 bis 12 Masse-% enthalten, wobei der Sulfatträger ausgewählt aus einer Gruppe umfassend oder bestehend aus Anhydrit, Bassanit, Gips oder eine Mischung daraus ist. Er dient vornehmlich zur Regulierung des Erstarrens des Zement-Wasser Gemisches, jedoch auch der Aktivierung eines latent-hydraulischen Zusatzstoffes. Durch das Hinzufügen des Sulfatträgers wird erreicht, dass der Hydratisierungsprozess und somit die Aushärtung stark beschleunigt werden, wodurch die Frühfestigkeit signifikant erhöht wird.

Neben den Bestandteilen der Zementmischung Portlandzementklinker und Konverterschlacke und/oder Elektroofenschlacke, sowie einem Sulfatträger können auch puzzolanische und/oder latent-hydraulische Additive zur Mischung hinzugefügt werden.

Das puzzolanische Additiv ist vorzugsweise ausgewählt aus einer Gruppe umfassend Asche, Tuffe, Tuffite, Trass, Ziegel, Perlit, Zeolith, calcinierte Tone, Glas, oder eine Mischung daraus. In der Natur vorkommende Mineralien bzw. Abfallstoffe der Industrie, die nicht eigens erzeugt werden müssen, dienen weiters dazu die CO₂ Bilanz der Zementmischung zu verbessern.

Das latent-hydraulische Additiv ist vorteilhafterweise ausgewählt aus einer Gruppe umfassend Baurestmassen und Schlacken oder eine Mischung daraus, weil dadurch ebenfalls bereits vorhandene Materialien verwendet werden, die keinen weiteren zusätzlichen CO₂-Fußabdruck hinterlassen.

Verwendung findet die erfindungsgemäße Zementmischung zur Herstellung von Baustoffen, wie Beton, insbesondere von Ortbeton oder Betonfertigteilen, Mörteln und Fugenmörteln, Estrichen, Betonsteinen, sowie von hydraulisch gebundenen Schüttmaterialien und/oder hydraulisch gebundener Tragschichten, wodurch bei der Verwendung für die Herstellung von Beton das Betongefüge dichter wird und die Porosität von Beton vermindert ist. Durch die Verwendung der erfindungsgemäße Zementmischung kommt es zudem zu einer Einsparung von natürlichen Resourcen, weil bereits vorhandene Ausgangsmaterialien, wie die während der Stahlerzeugung anfallenden Konverterschlacke, einer hochwertigen Weiterverwendung zugeführt wird.

Die Aufgabe der Erfindung wird auch durch ein Verfahren zur Herstellung einer Zementmischung aus Ausgangsmaterialien, wobei erstarrte Konverterschlacke und/oder Elektroofenschlacke und/oder Portlandzementklinker zerkleinert wird, gelöst, wobei Konverterschlacke und/oder Elektroofenschlacke und Portlandzementklinker vorkonditioniert und konditioniert werden, indem Konverterschlacke und/oder Elektroofenschlacke mittels Grobzerkleinerung und Grobkorngrößentrennung auf Partikel mit einem Äquivalentdurchmesser von 1 mm bis 100 mm zerkleinert werden und gegebenenfalls gleichzeitig oder nachfolgend metallische Fraktionen abgetrennt werden, und Portlandzementklinker mittels Grobzerkleinerung und Grobkorngrößentrennung auf Partikel mit einem Äquivalentdurchmesser von 1 mm bis 60 mm zerkleinert werden und die zerkleinerte Konverterschlacke und/oder Elektroofenschlacke auf eine Partikelgrößenverteilung gekennzeichnet durch einen Partikeldurchmesser D₁₀ zwischen 0,5 µm und 30 µm und einen Partikeldurchmesser D₈₀ zwischen 5 µm und 100 µm gemahlen wird. Dabei erweist sich von Vorteil, dass sowohl resourcenschonend als auch mit einem geringeren CO₂-Fußabdruck als im Vergleich zu herkömmlichen Verfahren zur Herstellung einer Zementmischung die erfindungsgemäße Zementmischung hergestellt werden kann.

Die Menge der metallischen Fraktion, insbesondere des metallischen Eisens hat einen Einfluss auf das Mahlen. Je mehr metallisches Eisen enthalten ist, umso eher reichert sich das Eisen im Aufbereitungsprozess an. Es erweist sich daher von Vorteil, die metallische Fraktion vor dem Mahlen abzutrennen.

In der Zementmischung sind mindestens 5 Masse-% Konverterschlacke und mindestens 20 Masse-% Portlandzementklinker vermengt. Durch die ausgewählten Mengen an Konverterschlacke und Portlandzementklinker kann trotz erheblicher Reduktion des Zementanteils und somit der CO₂ Emissionen bei der Herstellung der Zementmischung eine gleichbleibende Qualität der hydraulischen Abbindeeigenschaften der Zementmischung erreicht werden.

Die Zementmischung kann in einem Feinzerkleinerungs- und Korngrößentrennungsprozess auf eine Gesamtendfeinheit mit einem Blaine-Wert von 3000 cm²/g bis 30000 cm²/g gemahlen und gesichtet werden, wobei sich von Vorteil erweist, dass durch die ausgewählte Feinheit die Festigkeitsentwicklung, der Wasseranspruch, die Schüttdichte, die Lagerempfindlichkeit und die Hydratationswärme so festgelegt sind, dass eine vielseitige Anwendung der mit dem erfindungsgemäßen Verfahren hergestellten Zementmischung möglich ist.

Vorteilhaft kann sich erweisen, dass die Konverterschlacke in der Zementmischung auf eine Endfeinheit mit einem Blaine-Wert von 2500 cm²/g bis 25500 cm²/g gemahlen wird, weil durch die gewählte Feinheit die Mischbarkeit und auch Lagerfähigkeit mit dem gemahlenen Portlandzementklinker möglich ist.

Der gemahlene Portlandzementklinker in der Zementmischung kann auf eine Endfeinheit mit einem Blaine-Wert von 3000 cm²/g bis 30000 cm²/g gemahlen werden, wobei auch hier eine gute Mischbarkeit bzw. Lagerfähigkeit der Zementmischung über einen längeren Zeitraum möglich ist.

Es wird vorteilhafterweise Konverterschlacke und/oder Elektroofenschlacke mit einer spezifischen Dichte von weniger als 5000 kg/m³ vermahlen, weil dadurch Ausgangsmaterialien der Zementmischung ähnlicher spezifischer Dichte miteinander vermahlen und/oder gelagert werden können und somit die Lagereigenschaften günstig beeinflusst werden, da es während der Lagerung zu keiner Entmischung aufgrund von Dichteunterschieden kommt.

In einer weiteren Ausführungsvariante kann ein Sulfatträger und/oder puzzolanisches Additiv und/oder ein latent-hydraulisches Additiv vor oder nach dem Mahlen mit der Konverterschlacke und/oder Elektroofenschlacke und dem Portlandzementklinker vermengt werden, wodurch die Zementmischung unterschiedlichen Anforderungen angepasst werden kann.

Im Rahmen der vorliegenden Erfindung wird die Partikelgrößenverteilung durch die Angabe spezifischer Perzentile des Teilchendurchmessers definiert. Das D₈₀-Perzentil des Partikeldurchmessers zeigt an, dass 80 % der Partikel einen Äquivalentdurchmesser haben, der kleiner ist als der gegebene Wert. Zum Beispiel kann ein Wert für D₈₀ von 100 µm anzeigen, dass 80 % der Partikel einen Durchmesser kleiner als 100 µm haben, die verbleibenden 20 % der Partikel haben dementsprechend Durchmesser größer als 100 µm. Analog dazu gibt das D₁₀ Perzentil von 0,5 µm an, dass 10 % der Partikel einen Äquivalentdurchmesser kleiner als 0,5 µm aufweisen, wobei die verbleibenden 90 % der Partikel Durchmesser über 0,5 µm besitzen.

Der Begriff Konverterschlacke umfasst im Rahmen der Erfindung Konverterschlacke oder Elektroofenschlacke oder Konverterschlacke und Elektroofenschlacke, sofern nicht explizit etwas anderes angeführt ist.

Der Partikeldurchmesser bedeutet im Rahmen der Erfindung Äquivalentdurchmesser der Partikel. Die Messung des zuvor genannten Äquivalentdurchmessers wird mittels der Laserbeugungs-Partikelgrößenanalyse durchgeführt. Alternativ dazu können auch andere Methoden Anwendung finden, welche eine Bestimmung von Äquivalentdurchmessern von Partikeln < 1000 µm erlauben.

Die erfindungsgemäße Zementmischung umfasst die Ausgangsmaterialien gemahlenen Portlandzementklinker und gemahlene Konverterschlacke und/oder Elektroofenschlacke.

Konverterschlacke ist eine metallurgische Schlacke.

Schlacken entstehen bei metallurgischen Herstellungs- und Verarbeitungsprozessen als Sekundärprodukte und bestehen im Wesentlichen aus nichtmetallischen Komponenten. Bei der Verhüttung in Hochtemperaturprozessen bildet sich infolge ihrer geringeren Dichte eine homogene Schlackenschicht, sogenannte Schlackendecke, auf dem Metallbad. Die Schlacke wird im Schmelzfluss vom Metall abgetrennt und anschließend in flüssigem Zustand abgekühlt: entweder durch Abschreckung mit Wasser, wodurch aus Hochofenschlacke glasiger, feinkörniger Hüttensand entsteht, oder durch Abgießen in sogenannte Beete, in denen sich eine kristalline Ablagerung bildet, entsteht die Stahlwerksschlacke.

Es wird zwischen folgenden Eisenhüttenschlackenarten unterschieden (DIN 4301):
1. Hochofenschlacke: entsteht bei der Erzeugung von Roheisen durch thermo-chemische Reduktionsprozesse im Hochofen. Sie besteht aus den nichtmetallischen Komponenten des Eisenerzes, Bestandteilen von Koks bzw. Kohle sowie aus den aus metallurgischen Gründen benötigten Zuschlägen, wie Kalkstein oder Dolomit.
2. Stahlwerksschlacke: entsteht bei der Erzeugung von Rohstahl bzw. Stahl. Sie bildet sich bei der Rohstahlherstellung im circa 1600°C heißen Schmelzfluss und wird unterschieden in:
   a) Konverterschlacke oder auch LD-Schlacke bezeichnet, die bei der Umwandlung von flüssigem Roheisen und aufbereitetem Stahlschrott zu Rohstahl im LD-Konverter entsteht. Sie wird vorzugsweise aus Roheisen, Stahlschrott und weiteren Stoffen gebildet. Zuschläge sind Kalkstein oder Dolomit und sie enthält neben Calcium auch andere unter den oxidierenden Bedingungen des Prozesses oxidierte Bestandteile.
      Ein LD-Konverter ist ein Rohstahlherstellungsofen, in dem das Roheisen aus dem Hochofen mit etwa 20 % Stahlschrott zu Rohstahl verarbeitet wird. Hochreiner Sauerstoff wird durch das Schmelzbad geblasen, um den Kohlenstoffgehalt zu senken (Entkohlung). Schlackenbildner werden zur Reduzierung anderer unerwünschter Elemente verwendet. Diese Stoffe verbinden sich zu Silikaten und Oxiden und bilden eine flüssige Schlacke, die auf der Oberfläche des Rohstahls schwimmt.
      Konverterschlacken setzen sich im Wesentlichen aus Calciumoxid, Siliciumdioxid und Eisenoxid zusammen. Sie bestehen in der Regel zu rund 80 Masse-% aus CaO, FeO und SiO2 und Teilen von MnO, MgO, P₂O₅, Al₂O₃ und Cr₂O₃.
   b) Elektroofenschlacke, die bei der Verhüttung von Stahlschrott im Elektrolichtbogenofen entsteht. Sie wird aus Zuschlägen wie Kalkstein oder Dolomit gebildet und enthält darüber hinaus Bestandteile, die unter den Bedingungen des Prozesses oxidieren.
   c) Edelstahlschlacke, die bei der Verhüttung von Stahlschrott zur Erzeugung von rostfreiem und/oder hochlegiertem Stahl in verschiedenen metallurgischen Aggregaten entsteht.
      Sie wird unter Zugabe unterschiedlicher Zuschläge sowie Legierungsmittel gebildet.
   d) Sekundärmetallurgische Schlacke, die bei der Nachbehandlung von Rohstahl im Rahmen der Herstellung von Qualitäts- und Massenstählen entsteht.
3. Metallhüttenschlacke umfasst Schlacken aus den Zuschlägen der Verhüttung von Kupfer-, Zink-, Blei- und Chromerz mit Eisen als Austauschmetall. Eisensilikatschlacke aus der Kupfererzeugung ist eine Metallhüttenschlacke, die bei der pyrotechnischen Kupferverhüttung im Schmelzverfahren, Schachtofenbetrieb oder Elektroofen entsteht.

Konverterschlacke fällt bei der Erzeugung von Rohstahl nach dem Linz-Donawitz-Verfahren an. Elektroofenschlacke entsteht aus den oxidierbaren Begleitelementen der metallischen Einsatzstoffe sowie dem als Schlackebildner eingesetztem Kalk.

Konverterschlacke weist einen hohen Widerstand gegen Zerkleinerung auf, wodurch erhöhte Mahlenergie notwendig wird.

Die Konverterschlacke ist härter als Portlandzementklinker und besteht zu 100 % aus Kantkorn, weist also zu 100 % Bruchflächen auf. Daraus resultiert, dass bei der Verwendung von fein vermahlener Konverterschlacke im Vergleich zu granuliertem und fein vermahlenem Hüttensand als Zusatzstoff zur Zementmischung ein geringerer Wasseranspruch bei der Herstellung von Beton besteht, ohne die Verarbeitbarkeit der Betonmasse zu beeinträchtigen.

Konverterschlacke und Elektroofenschlacke besitzt ohne entsprechende Vorkonditionierung und Konditionierung, abgesehen von gewissen Freikalkgehalten, keine nennenswerte latent-hydraulischen Eigenschaften. Aufgrund dieser fehlenden latent-hydraulischen Eigenschaften, ohne entsprechende Aufbereitung, fanden Konverterschlacken und Elektroofenschlacken bisher keine Verwendung als Zementzusatzstoff. Erst durch die im Folgenden beschriebenen erfindungsgemäßen Vorkonditionierungs- und Konditionierungsmaßnahmen sind ausgeprägte latent-hydraulischen Eigenschaften zu erzielen.

Konverterschlacke weist gewisse Freikalkgehalte (Calciumoxid) auf. Diese haben einen Einfluss auf die Raumbeständigkeit im groben Korngrößenbereich. Calciumoxid reagiert mit Wasser und bildet Calciumhydroxid. Dieser Prozess führt zu einem hohen Kristallisationsdruck im Inneren des erhärteten Materials und kann durch den signifikanten Volumenzuwachs in weiterer Folge zu Rissbildung in den fertigen Bauteilen führen.

Durch die erfindungsgemäße Vorkonditionierung und Konditionierung der Konverterschlacke reagiert der Freikalk sofort bei der Betonherstellung mit dem Anmachwasser, wodurch nachträglicher Volumenzuwachs, Expansion und in weiterer Folge Rissbildung in den erhärteten Betonen nicht stattfinden.

Der verwendete Portlandzementklinker ist vorzugsweise Portlandzementklinker gemäß EN197-1.

Der gemahlene Portlandzementklinker ist in einer Menge von mindestens 20 Masse-% in der Zementmischung enthalten. Vorteilhaft erweisen sich Mengen von 20 Masse-% bis 90 Masse-%, vorzugsweise 40 Masse-% bis 80 Masse-%, insbesondere 50 Masse-% bis 70 Masse-% von gemahlenem Portlandzementklinker in der Zementmischung.

Als weiteres Ausgangsmaterial ist gemahlene Konverterschlacke in einer Menge von mindestens 5 Masse-% in der erfindungsgemäßen Zementmischung enthalten. Hier erweisen sich Mengen von 5 Masse-% bis 80 Masse-%, vorzugsweise 10 Masse-% bis 60 Masse-%, insbesondere 15 Masse-% bis 50 Masse-% als vorteilhaft, um möglichst gute Bindeeigenschaften der Zementmischung zu erzielen.

Durch die verwendeten Mengen von gemahlenem Portlandzementklinker und vorkonditionierter und konditionierte Konverterschlacke wird ein optimales Verhältnis in Bezug auf die CO₂-Emissionen erzielt.

Die vorkonditionierte und konditionierte gemahlene Konverterschlacke weist eine Partikelgrößenverteilung gekennzeichnet durch einen Partikeldurchmesser D₁₀ zwischen 0,5 µm und 30 µm und einen Partikeldurchmesser D₈₀ zwischen 5 µm und 100 µm aufweist. Gemäß einer bevorzugten Ausführungsform besitzt die gemahlene Konverterschlacke eine Partikelgrößenverteilung gekennzeichnet durch einen Partikeldurchmesser D₁₀ zwischen 1 µm und 20 µm und insbesondere zwischen 2 µm und 5 µm, wobei der Mahlaufwand im Verhältnis zur Festigkeit des Ausgangsmaterials in einem für die Zementzusammensetzung technisch erfolgreichen aber auch wirtschaftlichen Bereich bleibt.

Hinsichtlich des D₈₀-Wertes weist die gemahlene Konverterschlacke vorzugsweise eine Partikelgrößenverteilung gekennzeichnet durch einen Partikeldurchmesser D₈₀ zwischen 12 µm und 90 µm und insbesondere zwischen 20 µm und 70 µm auf.

Die bevorzugten D₈₀-Werte können mit den oben erwähnten bevorzugten D₁₀-Werten kombiniert werden, um verbesserte Eigenschaften hinsichtlich der Festigkeit und der Verarbeitbarkeit zu erzielen.

Um die Haltbarkeit und die Festigkeit des mit der Zementmischung resultierenden Betons zu optimieren, weist der gemahlene Portlandzementklinker eine Partikelgrößenverteilung gekennzeichnet durch einen Partikeldurchmesser D₁₀ zwischen 0,5 µm und 10 µm und einen Partikeldurchmesser D₈₀ zwischen 4 µm und 80 µm auf.

Gemäß einer bevorzugten Ausführungsform besitzt der gemahlene Portlandzementklinker eine Partikelgrößenverteilung gekennzeichnet durch einen Partikeldurchmesser D₁₀ zwischen 1 µm und 7 µm und insbesondere zwischen 1,5 µm und 4 µm.

Hinsichtlich des D₈₀-Wertes weist der gemahlene Portlandzementklinker vorzugsweise eine Partikelgrößenverteilung gekennzeichnet durch einen Partikeldurchmesser D₈₀ zwischen 9 µm und 70 µm und insbesondere zwischen 15 µm und 60 µm auf.

Die bevorzugten D₈₀-Werte können mit den oben erwähnten bevorzugten D₁₀-Werten kombiniert werden, um verbesserte Fließeigenschaften des Pulvers zu erzielen.

Gemäß einer bevorzugten Ausgestaltung der Zementmischung liegt das Gewichtsverhältnis von gemahlenem Portlandzementklinker und der vorkonditionierten und konditionierten gemahlenen Konverterschlacke zwischen 70/10 und 20/80, insbesondere bei 60/40.

Erfindungsgemäß können in der Zementmischung auch noch weitere Bestandteile, wie beispielsweise Sulfatträger, puzzolanische und/oder latent-hydraulische Zusatzstoffe und auch Aktivatoren, enthalten sein.

Die Gesamtendfeinheit der Zementmischung kann einen Blaine-Wert von 3000 cm²/g bis 30000 cm²/g aufweisen. Der Blaine-Wert ist ein standardisiertes Maß für den Grad der Mahlfeinheit, insbesondere für Zemente hauptsächlich bestehend aus Portlandzementklinker.

Für andere Materialien wie beispielsweise Puzzolane oder latent-hydraulische Zusatzstoffe können die Blaine-Werte jedoch durch einen erheblichen systematischen Messfehler beeinträchtigt sein, weshalb die Bestimmung der Mahlfeinheit dieser Zusatzstoffe vorzugsweise mittels Laserbeugungs-Partikelgrößenanalyse durchgeführt werden sollte.

Die gemahlene Konverterschlacke der Zementmischung kann eine Endfeinheit mit einem Blaine-Wert von 2500 cm²/g bis 25000 cm²/g aufweisen.

Der gemahlene Portlandzementklinker der Zementmischung kann eine Endfeinheit mit einem Blaine-Wert von 3000 cm²/g bis 30000 cm²/g aufweisen.

Die Zementmischung umfasst 1 bis etwa 12 Masse-% zumindest eines Sulfatträgers, wobei der Sulfatträger ausgewählt aus einer Gruppe umfassend oder bestehend aus Anhydrit, Bassanit, Gips oder eine Mischung daraus ist. Dadurch können die Abbindeeigenschaften an die jeweiligen Anforderungen exakt angepasst werden. Gemäß einer bevorzugten Ausführungsform der Zementmischung sind 2 Masse-% bis 10 Masse-%, insbesondere 4 Masse-% bis 8 Masse-% Sulfatträger mit der Konverterschlacke und/oder Elektroofenschlacke und Portlandzementklinker vermengt.

In einer Weiterbildung der Zusammensetzung kann diese auch zumindest ein puzzolanisches Additiv ausgewählt aus einer Gruppe umfassend oder bestehend aus Asche, Tuffe, Tuffite, Trass, Ziegel, Perlit, Zeolith, calcinierteTone, Glas oder eine Mischung daraus und/oder ein latent-hydraulisches Additiv ausgewählt aus einer Gruppe umfassend Baurestmassen und/oder Hüttensand oder eine Mischung daraus enthalten. Die Mengen des puzzolanischen und/oder latent-hydraulischen Additivs in der erfindungsgemäßen Zementmischung betragen zwischen 3 Masse-% und 50 Masse-%, vorzugsweise zwischen 5 Masse-% und 40 Masse-%, insbesondere zwischen 8 Masse-% und 30 Masse-%.

Latent-hydraulische und puzzolanische Zusatzstoffe reagieren mit den Hydratationsprodukten des Portlandzementklinkers und bilden zusätzliche erhärtungsfähige Hydratationsprodukte, die einen positiven Beitrag zur Festigkeitsentwicklung und Dauerhaftigkeit des Betons leisten.

Fein gemahlener Kalkstein ist zwar hydraulisch nicht aktiv, verändert aber die Hydratation der Klinkermineralien und kann auch der erfindungsgemäßen Zementmischung beigemengt sein. Er wird eingesetzt, um die Entwicklung der Zementfestigkeit und der Verarbeitbarkeit zu steuern.

Die Zementmischung wird zur Herstellung von Baustoffen, wie Beton, insbesondere von Ortbeton oder Betonfertigteilen, Mörteln und Fugenmörteln, Estrichen, Betonsteinen, sowie von Schüttmaterial und/oder Tragschichten verwendet. Besonders gut eignet sich die erfindungsgemäße Zementmischung zur Herstellung von Beton. Auch eine Verwendung der Zementmischung als Baustoffbindemittel bei Fußboden-, Wand-, und Dachelementen, Schüttmaterialien und von Tragschichten für den Straßen- und Wegebau ist möglich.

Die Erfindung bezieht sich weiters auf eine Betonzusammensetzung, die zumindest eine Zementmischung gemäß der Erfindung, Zuschlagstoffe und Wasser enthält. Bevorzugt ist das Wasser/Zement-Verhältnis zwischen 0,3 und 0,7 gewählt.

Das erfindungsgemäße Verfahren verwendet zur Herstellung einer Zementmischung die Ausgangsmaterialien erstarrte Konverterschlacke und/oder Elektroofenschlacke und Portlandzementklinker.

Die Konverterschlacke und/oder Elektroofenschlacke wird vorkonditioniert, indem sie zerkleinert wird. Die Aufbereitung umfasst das Brechen und Sieben der Konverterschlacke. Durch die Voraufbereitung, auch Vorkonditionierung bezeichnet, wird die Korngröße der Konverterschlacke für die nachfolgenden Prozesse reduziert. Ausgehend von den Eigenschaften der Konverterschlacke wird die Vorkonditionierung entsprechend angepasst. Dadurch kann eine gezielte Korngrößenverteilung des Endproduktes durch Mahlung in der Mühle erreicht werden.

Die Vorkonditionierung der Konverterschlacke und des Portlandzementklinkers erfolgt in Korngrößen mit unterschiedlichen Äquivalentdurchmesser, wobei der Äquivalentdurchmesser der Körner der vorkonditionierten Konverterschlacke im Vergleich zu den Körnern des vorkonditionierten Portlandzementklinkers kleiner ist.

Bei der Vorkonditionierung werden die Konverterschlacke und/oder Elektroofenschlacke mittels Grobzerkleinerung und Grobkorngrößentrennung auf Partikel mit einem Äquivalentdurchmesser von 1 mm bis 100 mm zerkleinert. In einer bevorzugten Ausführungsform wird die Konverterschlacke und/oder Elektroofenschlacke auf Partikel mit einem Äquivalentdurchmesser vom 2 mm bis 30 mm, insbesondere 5 mm bis 15 mm vorkonditioniert.

Ein wichtiger Unterschied zwischen Hochofenschlacke (ua Hüttensand) und Stahlwerkschlacke (ua Konverterschlacke, Elektroofenschlacke) ist die Eigenschaft der Hochofenschlacke bei rascher Abkühlung glasartig zu erstarren, welche den anderen Schlacken nicht oder nur eingeschränkt besitzen und dadurch ein Granulierungsprozess bei der Konverterschlacke nicht zielführend anwendbar ist.

Gegebenenfalls werden gleichzeitig oder nachfolgend metallische Fraktionen abgetrennt.

Auch der Portlandzementklinker kann vorkonditioniert werden, wobei der Portlandzementklinker mittels Grobzerkleinerung und Grobkorngrößentrennung auf Partikel mit einem Äquivalentdurchmesser von 1 mm bis 60 mm zerkleinert und vorkonditioniert wird. In einer bevorzugten Ausführungsform wird der Portlandzementklinker auf Partikel mit einem Äquivalentdurchmesser vom 5 bis 50 mm, insbesondere 10 bis 30 mm vorkonditioniert.

Die zerkleinerte Konverterschlacke und/oder Elektroofenschlacke wird auf eine Partikelgrößenverteilung gekennzeichnet durch einen Partikeldurchmesser D₁₀ zwischen 0,5 µm und 30 µm und einen Partikeldurchmesser D₈₀ zwischen 5 µm und 100 µm gemahlen. Zum Vermahlen wird vorzugsweise eine Kugelmühle verwendet.

Die vorkonditionierte und konditionierte gemahlene Konverterschlacke wird auf eine Partikelgrößenverteilung gekennzeichnet durch einen Partikeldurchmesser D₁₀ zwischen 0,5 µm und 30 µm und einen Partikeldurchmesser D₈₀ zwischen 5 µm und 100 µm gemahlen.

Gemäß einer bevorzugten Ausführungsform wird die vorkonditionierte Konverterschlacke auf eine Partikelgrößenverteilung gekennzeichnet durch einen Partikeldurchmesser D₁₀ zwischen 1 µm und 20 µm und insbesondere zwischen 2 µm und 5 µm gemahlen.

Hinsichtlich des D₈₀-Wertes wird die vorkonditionierte Konverterschlacke vorzugsweise auf eine Partikelgrößenverteilung gekennzeichnet durch einen Partikeldurchmesser D₈₀ zwischen 12 µm und 90 µm und insbesondere zwischen 20 µm und 70 µm gemahlen.

Die bevorzugten D₈₀-Werte können mit den oben erwähnten bevorzugten D₁₀-Werten kombiniert werden, um die Betoneigenschaften zu verbessern.

Bei der Herstellung der Zementmischung können alle Ausgangsmaterialien zu jedem Prozessschritt miteinander in Verbindung gebracht werden. Dabei können alle Bestandteile einzeln vorkonditioniert und/oder konditioniert, zerkleinert, gegebenenfalls homogenisiert, gesiebt, getrocknet und gemahlen und danach vermengt werden oder auch zu einem früheren Prozessschritt, beispielsweise nach der Trocknung oder der Zerkleinerung, miteinander vermengt werden.

Bei einer möglichen Ausführungsvariante des Herstellungsverfahrens der Zementmischung können die einzelnen Bestandteile einzeln gebrochen werden und einzeln getrocknet werden und anschließend gemeinsam gemahlen werden.

Bei einer weiteren möglichen Ausführungsvariante des Herstellungsverfahrens der Zementmischung können die einzelnen Bestandteile einzeln gebrochen werden und einzeln getrocknet werden und einzeln gemahlen werden und danach erst vermengt werden, um das fertige Produkt zu erzielen.

Nach der Vorkonditionierung der Ausgangsmaterialien kann sofern erforderlich der Feuchtegehalt auf eine Produktfeuchte von < 1 % reduziert werden. Je nach Feuchtegehalt der Ausgangsmaterialien, wie beispielsweise Konverterschlacke, Portlandzementklinker, Sulfatträger, puzzolanischer Zusatzstoff, latent-hydraulischer Zusatzstoff, etc. können die gebrochenen und gesiebten Produkte getrocknet werden. Dabei wird beispielsweise das Material auf einen Fließbetttrockner aufgegeben, mittels Heißgas auf eine Produktfeuchte < 1 % getrocknet und gemahlen oder in Vorhaltesilos gelagert. Die Trocknung erfolgt erfindungsgemäß mit Gastemperaturen zwischen 50°C und 450°C, vorzugsweise zwischen 100°C und 250°C, insbesondere zwischen 150°C und 200°C.

Alternative Trocknungsarten, wie z.B. Trommeltrockner, können auch mit höheren oder geringeren Temperaturen betrieben werden.

Nach der Vorkonditionierung der Ausgangsmaterialien, sofern erforderlich, können diese entweder einzeln, gegebenenfalls getrocknet, und gemahlen werden oder teilweise gemeinsam konditioniert werden oder alle zusammen nach der Vorkonditionierung konditioniert werden.

Im Rahmen der Erfindung wird unter Vorkonditionierung das Brechen und Sieben und gegebenenfalls das Trocknen sowie die Abscheidung von magnetisierbaren Komponenten und unter Konditionierung das Mahlen und Sichten und gegebenenfalls das schlussendliche Vermengen der Bestandteile der Ausgangsmaterialien verstanden.

Zum Mahlen kann das vorkonditionierte Ausgangsmaterial, insbesondere die vorkonditionierte Konverterschlacke in eine Mühle, vorzugsweise in eine Kugelmühle aufgegeben. In der Mühle wird das Ausgangsmaterial, wie zum Beispiel die Konverterschlacke und der Portlandzementklinker gemahlen und anschließend bei Bedarf in einem Sichter in Grobgut und Feingut getrennt. Das Feingut entspricht der erfindungsgemäßen Korngrößenverteilung der Konverterschlacke und/oder Elektroofenschlacke oder der entsprechenden Mischung von Konverterschlacke, Portlandzementklinker, Sulfatträger, puzzolanischer Zusatzstoff, latent-hydraulischer Zusatzstoff, etc., sofern die Mischung der Bestandteile vor der Aufgabe auf die Mühle stattgefunden hat.

Gegebenenfalls kann das Mahlgut gekühlt werden, wobei vorzugsweise eine indirekte Kühlung erfolgt, wobei die Produkttemperatur reduziert wird.

In der erfindungsgemäßen Zementmischung werden mindestens 5 Masse-% Konverterschlacke und mindestens 20 Masse-% Portlandzementklinker vermengt.

Vorteilhaft erweisen sich Mengen von 20 Masse-% bis 90 Masse-%, vorzugsweise 40 Masse-% bis 80 Masse-%, insbesondere 50 Masse-% bis 70 Masse-% von gemahlenem Portlandzementklinker in der Zementmischung.

Als weiteres Ausgangsmaterial ist gemahlene Konverterschlacke in der erfindungsgemä-βen Zementmischung enthalten. Hier erweisen sich Mengen von 5 Masse-% bis 80 Masse-%, vorzugsweise 10 Masse-% bis 60 Masse-%, insbesondere 15 Masse-% bis 50 Masse-% als vorteilhaft um möglichst gute Bindeeigenschaften der Zementmischung zu erzielen.

Zementmischungen mit hohen Mengenanteilen bis zu 80 Masse-% von Konverterschlacke können beispielsweise als hydraulische Tragschichtbinder eingesetzt werden. Hydraulische Tragschichtbinder sind spezielle Bindemittel, die in der Straßenbau- und Verkehrsinfrastruktur eingesetzt werden. Diese Binder werden in der Regel für die Herstellung von Tragschichten im Erd-, Straßen- Eisenbahn- und Flughafenbau verwendet. EN 13282-1 legt die mechanischen, physikalischen und chemischen Anforderungen dieser Bindemittel fest. Die Verwendung hydraulischer Tragschichtbinder ist entscheidend für die Stabilität und Langlebigkeit von Verkehrsinfrastrukturen. Sie spielen eine wichtige Rolle bei der Schaffung tragfähiger Unterlagen, die den Einflüssen von Verkehrslasten, Witterung und anderen Umweltfaktoren standhalten müssen.

Die Zementmischung kann in einem Feinzerkleinerungs- und Korngrößentrennungsprozess auf eine Gesamtendfeinheit mit einem Blaine-Wert von 3000 cm²/g bis 30000 cm²/g gemahlen werden.

Die Konverterschlacke kann in der Zementmischung auf eine Endfeinheit mit einem Blaine-Wert von 2500 cm²/g bis 25000 cm²/g gemahlen werden.

Der gemahlene Portlandzementklinker in der Zementmischung kann auf eine Endfeinheit mit einem Blaine-Wert von 3000 cm²/g bis 30000 cm²/g gemahlen werden.

Es wird Konverterschlacke und/oder Elektroofenschlacke mit einer spezifischen Dichte von weniger als 5000 kg/m³ vermahlen. Vorzugsweise wird Konverterschlacke und/oder Elektroofenschlacke mit einer spezifischen Dichte von 3000 kg/m³ bis 4500 kg/m³, insbesondere von 3200 kg/m³ bis 4200 kg/m³ vermahlen.

In einer Weiterbildung des Verfahrens kann ein Sulfatträger und/oder puzzolanisches Additiv und/oder ein latent-hydraulisches Additiv vor oder nach dem Mahlen mit der Konverterschlacke und/oder Elektroofenschlacke und dem Portlandzementklinker vermengt werden.

Der Sulfatträger wird in einer Menge von 1 Masse-% bis 12 Masse-% zugegeben. Gemäß einer bevorzugten Ausführungsform der Zementmischung werden 2 Masse-% bis 10 Masse-%, insbesondere 4 Masse-% bis 8 Masse-% Sulfatträger mit der Konverterschlacke und/oder Elektroofenschlacke und Portlandzementklinker vermengt.

Das puzzolanische und/oder latent-hydraulische Additiv werden in der erfindungsgemäßen Zementmischung in einer Menge zwischen 3 Masse-% und 50 Masse-%, vorzugsweise zwischen 5 Masse-% und 40 Masse-%, insbesondere zwischen 8 Masse-% und 30 Masse-% zugegeben.

Alkalischer Aktivator kann NaOH, Na₂SiO₃, Na₂SiO₃·5H₂O, Na₂CO₃, NaAlO₂, CaSO₄, CaSO₄ 0,5H₂O, CaSO₄ 2H₂O, K₂CO₃, K₂SO₄, Na₂SO₄, KOH, CaO, Ca(OH)₂, MgO, Al₂O₃, in fester, flüssiger oder gelöster Form, Zement Klinker, Rotschlamm, Maisstängel- und Maiskolbenasche, Vaterit, sowie Alkalisilikate in einer Kombination aus Natriumoxid (Na₂O) oder Kaliumoxid (K₂O) oder Lithiumoxid (LiO₂) und Silikat (SiO₂) und gegebenenfalls Wasser (H₂O) mit der chemischen Formel xSiO₂*yM₂O*zH₂O, wobei M, Li+,K+ oder Na+ sein kann, sowie weitere nicht alkalische Aktivatoren, welche in ähnlicher Weise wie die zuvor genannten Aktivatoren wirken, wie beispielsweise Phosphorsäure, Aluminium Ätzlösungen, oder Bayer-Lösungen, Aluminiummetaphosphate, Natriumphosphate und Natriumtrimetaphosphat-Hydrate, Natriumpolyphosphate, Natriumhydrogenphosphat, Sodalith, Natriumhexafluorosilikat, Tetramethylsilan, Kaliumpyrophosphat sowie Alkalihexafluorosilikate oder fein vermahlene Materialien wie Glasscherben, Kalkstein, Dolomit, Karbonate und Silikate, enthalten sein, wodurch eine weitere Aktivierung und Polymerisierung des puzzolanischen oder latent-hydraulischen Zusatzstoffes erfolgen kann.

Weitere Aktivatoren und Beschleuniger stellen Sulfate, wie beispielsweise Aluminiumsulfat, Formiate, wie beispielsweise Calciumformiat und Aluminiumformiat, Fluoride wie beispielsweise Aluminiumfluoride, Aluminate wie beispielsweise Natriumaluminate und Kaliumaluminate, Hydroxide, wie beispielsweise amorphe Aluminiumhydroxide, Ethanolamine, wie beispielsweise Diethanolamin (DEA) und Triethanolamin (TEA), Carbonate, wie beispielsweise Lithiumcarbonate, Natriumcarbonate und Kaliumcarbonat, Silikate wie beispielsweise Wassergläser, Nitrate, Nitrite und Thiocyanate, Sulfide, Natriumpolyphosphat, Betocarb^{®} Produkte, Kaliumcitrat und Ultrafeines Ca(OH)₂, dar.

Im Folgenden wird die Erfindung anhand von beispielhaften Ausführungsformen erläutert.

Die D₁₀ und D₈₀ Werte der angeführten Beispiele beziehen sich auf die Partikelgrößenverteilung der erfindungsgemäßen Zementmischung, wobei diese aus den D₁₀ und D₈₀ Werten der vorkonditionierten und konditionierten Konverterschlacke bzw. Elektroofenschlacke und des vorkonditionierten und konditionierten Portlandzementklinkers bzw. der anderen Bestandteile der Zementmischung resultieren bzw. erreicht werden.

Um eine Vergleichbarkeit zwischen unterschiedlichen Zementmischungen mit variablen Anteilen unterschiedlicher Hauptbestandteile, wie Konverterschlacke, Elektroofenschlacke, Portlandzementklinker, Gips, Hüttensand, Kalksteinmehl, Puzzolane, Aschen, herzustellen, wurden definierte Vergleichsmahlungen durchgeführt. Diese Vergleichsmahlungen erfolgten mit einem Zielwert von für das D₈₀-Perzentil von 30 µm. Daraus ergeben sich für das D₁₀-Perzentil Werte zwischen 0,3 µm und 5,5 µm. Diese Vergleichsmahlungen wurden für Tests durchgeführt, bei denen in der Spalte unter D₁₀ und D₈₀ V für Vergleichsmahlung vermerkt ist.

Beim Aktivitätsindex werden die Druckfestigkeiten nach der DIN EN 196-1 bestimmt und angeführt. Die Reaktionsfähigkeit hydraulischer, latent-hydraulischer und puzzolanischer Stoffe, dh ihr Festigkeitsbeitrag in definierten Gemischen mit einem Prüfzement im Vergleich zur Festigkeit eines Gemischs nur mit dem Prüfzement ohne den zu prüfenden Stoff, wird üblicherweise mit dem Aktivitätsindex beurteilt.

Die Schlacken der Test 1 bis 117 wurden erfindungsgemäß vorkonditioniert und konditioniert, indem die Konverterschlacke gebrochen wurde und anschließend auf eine Korngröße mit einer Partikelgrößenverteilung gekennzeichnet durch einen Partikeldurchmesser D₁₀ zwischen 0,5 µm und 30 µm und einen Partikeldurchmesser D₈₀ zwischen 5 µm und 100 µm gemahlen wurde.

Zur Beurteilung der Leistungsfähigkeit der Mischung in den Tests kann der Aktivitätsindex bei 28 Tagen Prüfalter herangezogen werden. Wenn bei der Betrachtung dieses Wertes Aktivitätsindizes feststellbar sind, welche den verbleibenden Klinkeranteil einschließlich des Sulfatträgeranteiles in der Zementmischung übersteigen, ist von festigkeitsmäßig zielführenden Vorkonditionierungen und Konditionierungen und Mischungen auszugehen. Beispielsweise zeigt Test 1 einen Aktivitätsindex bei 28 Tagen von 79 %. Dieser Wert übersteigt den verbleibenden Anteil von Portlandzementklinker und Sulfatträger von 75 % als Referenz und zeigt den Festigkeitsbeitrag der eingesetzten Elektroofenschlacke und somit das Vorliegen von latent-hydraulischen Eigenschaften.

Die Referenzwerte werden in einzelnen Tests unterschritten, was der Teststrategie mit unterschiedlichen Komponenten und Mischungen geschuldet ist.

**Tabelle 1: Test 1 bis 4**

| | | | Konverterschlacke | | Elektroofenschlacke | | Portlandzementklinker | | Gips | | Aktivitätsindex | | | |
|---|---|---|---|---|---|---|---|---|---|---|---|---|---|---|
| Test | D₁₀ µm | D₈₀ µm | Art | Menge [M.%] | Art | Menge [M.%] | Art | Menge [M.%] | Art | Menge [M.%] | 7d | 28 d | 56 d | 90 d |
| 1 | V | V | | 0 | A | 25 | A | 68,97 | A | 6,03 | 82 | 79 | 77 | 78 |
| 2 | V | V | | 0 | B | 25 | A | 68,97 | A | 6,03 | 85 | 86 | 83 | 85 |
| 3 | V | V | | 0 | C | 25 | A | 68,97 | A | 6,03 | 81 | 78 | 74 | 74 |
| 4 | V | V | | 0 | D | 25 | A | 68,97 | A | 6,03 | 72 | 72 | 71 | 70 |

Die Tests 1 bis 4 zeigen, dass Zementmischungen mit Elektroofenschlacken je nach Schlackenart und Herkunft unterschiedliche Festigkeitsentwicklungen zeigen. Aufgrund der Messergebnisse des Aktivitätsindex sind in den Tests 1 bis 3 latent-hydraulische Eigenschaften der Elektroofenschlacke zu erkennen. Hingegen der Aktivitätsindex des Tests 4 mit einer Elektroofenschlacke unterschiedlicher Provenienz gibt keinen Hinweis auf latent-hydraulischen Eigenschaften dieser Elektroofenschlacke.

**Tabelle 2: Test 5 bis 10**

| | | | Konverterschlacke | | Elektroofenschlacke | | Portlandzementklinker | | Gips | | Aktivitätsindex | | | |
|---|---|---|---|---|---|---|---|---|---|---|---|---|---|---|
| Test | D₁₀ µm | D₈₀ µm | Art | Menge [M.%] | Art | Menge [M.%] | Art | Menge [M.%] | Art | Menge [M.%] | 7d | 28 d | 56 d | 90 d |
| 5 | V | V | A1 | 25 | | 0 | A | 68,97 | A | 6,03 | 84 | 94 | 96 | 96 |
| 6 | V | V | A2 | 25 | | 0 | A | 68,97 | A | 6,03 | 80 | 88 | 92 | 93 |
| 7 | V | V | A3 | 25 | | 0 | A | 68,97 | A | 6,03 | 84 | 90 | | |
| 8 | V | V | B | 25 | | 0 | A | 68,97 | A | 6,03 | 88 | 88 | 88 | 89 |
| 10 | V | V | C | 25 | | 0 | A | 68,97 | A | 6,03 | 90 | 86 | 85 | 84 |

Die Tests 5 bis 7 zeigen, dass die Konverterschlacken der Provenienz A der Chargen 1 bis 3, der Provenienz B und C bei erfindungsgemäßer Vorkonditionierung und Konditionierung deutlich latent-hydraulische Eigenschaften aufweisen.

**Tabelle 3: Test 8 und 9, 11 und 12,15 und 16 sowie 17 und 18**

| | | | Konverterschlacke | | Elektroofenschlacke | | Portlandzementklinker | | Gips | | Aktivitätsindex | | | |
|---|---|---|---|---|---|---|---|---|---|---|---|---|---|---|
| Test | D₁₀ µm | D₈₀ µm | Art | Menge [M.%] | Art | Menge [M.%] | Art | Menge [M.%] | Art | Menge [M.%] | 7d | 28 d | 56 d | 90 d |
| 8 | V | V | B | 25 | | 0 | A | 68,97 | A | 6,03 | 88 | 88 | 88 | 89 |
| 9 | V | V | B | 50 | | 0 | A | 43,97 | A | 6,03 | 43 | 60 | 61 | 66 |
| 11 | V | V | A4 | 25 | | 0 | B | 68,46 | B | 6,54 | 90 | 86 | 85 | 84 |
| 12 | V | V | A4 | 50 | | 0 | B | 43,46 | B | 6,54 | 77 | 84 | 85 | 88 |
| 15 | 2,38 | 30,3 | A3 | 25 | | 0 | A | 68,97 | A | 6,03 | 83 | 91 | 90 | 86 |
| 16 | 2,56 | 32,5 | A3 | 50 | | 0 | A | 43,97 | A | 6,03 | 32 | 45 | 48 | 45 |
| 17 | 1,51 | 22,6 | A3 | 25 | | 0 | A | 68,97 | A | 6,03 | 79 | 82 | 90 | 86 |
| 18 | 1,96 | 24,7 | A3 | 50 | | 0 | A | 43,97 | A | 6,03 | 31 | 46 | 45 | 44 |

Test 8 zeigt in Vergleich zu Test 9, Test 11 zeigt in Vergleich zu Test 12, Test 15 zeigt in Vergleich zu Test 16 und Test 17 zeigt in Vergleich zu Test 18, dass bei Zementmischungen mit abnehmender Portlandzementklinkermenge bei gleichzeitig zunehmender Konverterschlackenmenge unabhängig von deren Provenienz der Aktivitätsindex und somit die erwartbaren Festigkeiten abnehmen.

**Tabelle 4: Test 13 und 14**

| | | | Konverterschlacke | | Portlandzementklinker | | Gips | | Hüttensand | | Kalksteinmehl | | Aktivitätsindex | | | |
|---|---|---|---|---|---|---|---|---|---|---|---|---|---|---|---|---|
| Test | D₁₀ µm | D₈₀ µm | Art | M.% | Art | M.% | Art | M.% | Art | M.% | Art | M.% | 7 d | 28 d | 56 d | 90 d |
| 13 | V | V | A4 | 25 | B | 48,46 | B | 6,54 | A | 13,5 | A | 6,5 | 75 | 78 | 82 | 85 |
| 14 | V | V | A4 | 50 | B | 23,46 | B | 6,54 | A | 13,5 | A | 6,5 | 23 | 43 | 52 | 61 |

Durch die Zugabe von Hüttensand und Kalksteinmehl anstelle von Portlandzementklinker im Zuge der Konditionierung, während der Mahlung, zur Zementmischung werden geringere Festigkeiten erzielt als bei Zementmischungen in Vergleich zu Test 11 und 12, wo kein Hüttensand beigegeben ist.

**Tabelle 5: Test 19 und 20**

| | | | Konverterschlacke | | Elektroofenschlacke | | Portlandzementklinker | | Gips | | Aktivitätsindex | | | |
|---|---|---|---|---|---|---|---|---|---|---|---|---|---|---|
| Test | D₁₀ µm | D₈₀ µm | Art | Menge [M.%] | Art | Menge [M.%] | Art | Menge [M.%] | Art | Menge [M.%] | 7d | 28 d | 56 d | 90 d |
| 19 | 2,23 | 29,8 | A4 | 25 | | 0 | A | 68,97 | A | 6,03 | 73 | 83 | 87 | 90 |
| 20 | 1,16 | 19,6 | A4 | 25 | | 0 | A | 68,97 | A | 6,03 | 80 | 87 | 84 | 86 |

Im Vergleich von Test 20 zu Test 19 kann gezeigt werden, dass durch die Verringerung der Korngrößenverteilungen der Konverterschlackenanteile, erreicht durch die erfindungsgemäße Vorkonditionierung und Konditionierung im Mahl-Sichtungs-Prozess, die Frühfestigkeit deutlich erhöht werden kann.

**Tabelle 6: Test 21 bis 23**

| | | | Konverterschlacke | | Elektroofenschlacke | | Portlandzementklinker | | Gips | | Aktivitätsindex | | | |
|---|---|---|---|---|---|---|---|---|---|---|---|---|---|---|
| Test | D₁₀ µm | D₈₀ µm | Art | Menge [M.%] | Art | Menge [M.%] | Art | Menge [M.%] | Art | Menge [M.%] | 7d | 28 d | 56 d | 90 d |
| 21 | 3,82 | 65,3 | A3 | 25 | | 0 | A | 68,97 | A | 6,03 | 75 | 82 | 82 | 83 |
| 22 | 2,92 | 50,3 | A3 | 25 | | 0 | A | 68,97 | A | 6,03 | 76 | 82 | 80 | 81 |
| 23 | 1,80 | 31,6 | A3 | 25 | | 0 | A | 68,97 | A | 6,03 | 84 | 90 | 86 | 89 |

Durch verhältnismäßig grobe Konverterschlackenanteile, wie z. B. 70 µm und 50 µm für das D₈₀ Perzentil, der Zementmischung werden die Frühfestigkeiten verringert, welche auf eine unzureichende Vorkonditionierung durch Brechen und Sieben und Konditionierung durch Mahlung und Sichtung zurückzuführen sind. Dies ist beim Vergleich von Test 23, wo das D₈₀ Perzentil bei 30 µm liegt, zu den Tests 21 und 22 erkennbar.

**Tabelle 7: Test 24 bis 28**

| | | | Konverterschlacke | | Elektroofenschlacke | | Portlandzementklinker | | Gips | | Aktivitätsindex | | | |
|---|---|---|---|---|---|---|---|---|---|---|---|---|---|---|
| Test | D₁₀ µm | D₈₀ µm | Art | Menge [M.%] | Art | Menge [M.%] | Art | Menge [M.%] | Art | Menge [M.%] | 7d | 28 d | 56 d | 90 d |
| 24 | 2,37 | 32,1 | A4 | 50 | | 0 | A | 43,97 | A | 6,03 | 9 | 52 | 62 | 68 |
| 25 | 1,70 | 20,4 | A4 | 50 | | 0 | A | 43,97 | A | 6,03 | 30 | 52 | 55 | 56 |
| 26 | 4,71 | 70,3 | A3 | 50 | | 0 | A | 43,97 | A | 6,03 | 23 | 49 | 53 | 53 |
| 27 | 3,62 | 55,0 | A3 | 50 | | 0 | A | 43,97 | A | 6,03 | 34 | 50 | 52 | 50 |
| 28 | 2,02 | 34,6 | A3 | 50 | | 0 | A | 43,97 | A | 6,03 | 31 | 42 | 41 | 43 |

Die Ergebnisse der Tests 24 bis 28 zeigen, dass bei Zementmischungen mit einem hohen Konverterschlackenanteil in der Gesamtmischung selbst durch eine optimierte Korngrö-βenverteilungen durch entsprechende Vorkonditionierung (Brechen und Sieben) und Konditionierung (Mahlung) die Frühfestigkeitswerte niedrig bleiben, jedoch die 28 Tage Festigkeiten in einem annehmbaren Bereich gebracht werden können.

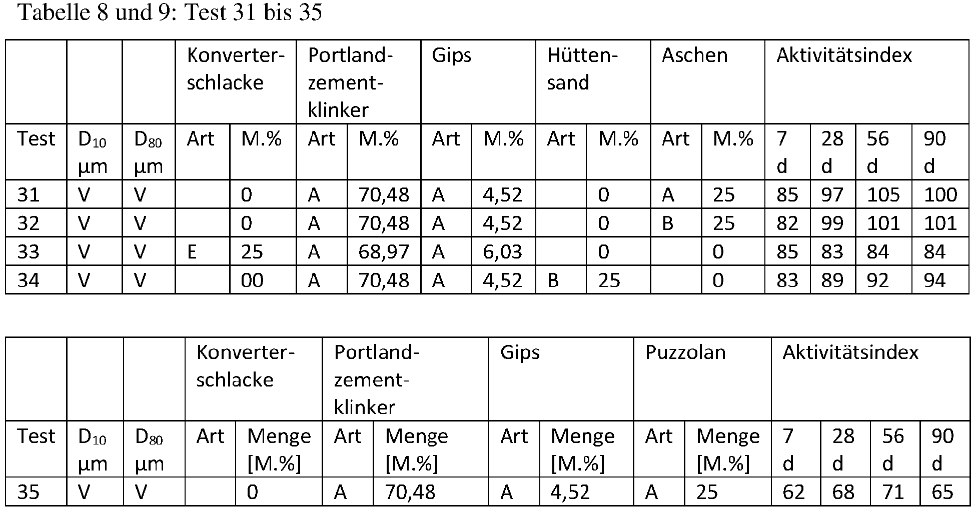

Vergleichende Analysen zeigen, dass eine Zementmischung mit Konverterschlacken (Test 33) bei geeigneter Aufbereitung durch Vorkonditionierung und Konditionierung zwar niedrigere Festigkeitsentwicklungen als Zementmischungen mit qualitativ hochwertigen Flugaschen (Test 31 und 32) aufweisen, aber ähnliche Frühfestigkeiten wie Zementmischungen mit Hüttensanden (Test 34) bezüglich Aktivitätsindex am Tag 28, 56 und 90 und deutlich höhere Festigkeiten als Zementmischungen mit ausgewählten Puzzolanen (Test 35) aufweisen.

Gemahlenen Kesselaschen (Art E), welche nur geringe Feinheiten erzielen, zeigen nahezu keinen Betrag zur Festigkeitsentwicklung wie in Tests 88 gezeigt. Der fehlende Betrag zur Festigkeitsentwicklung ist auf unzureichende Vorkonditionierung und Konditionierung der Asche zurückzuführen.

**Tabelle 10: Test 36 bis 41**

| | | | Konverterschlacke | | Portlandzementklinker | | Gips | | Puzzolan | | Aktivitätsindex | | | |
|---|---|---|---|---|---|---|---|---|---|---|---|---|---|---|
| Test | D₁₀ µm | D₈₀ µm | Art | Menge [M.%] | Art | Menge [M.%] | Art | Menge [M.%] | Art | Menge [M.%] | 7 d | 28 d | 56 d | 90 d |
| 36 | V | V | | 0 | A | 70,48 | A | 4,52 | B1 | 25 | 74 | 84 | 84 | 82 |
| 37 | V | V | | 0 | A | 70,48 | A | 4,52 | B1 | 25 | 71 | 80 | 84 | 82 |
| 38 | V | V | A3 | 25 | A | 68,97 | A | 6,03 | | | 77 | 87 | 88 | 89 |
| 39 | V | V | A3 | 25 | A | 68,97 | A | 6,03 | | | 76 | 85 | 85 | 84 |
| 40 | V | V | A3 | 12,5 | A | 69,72 | A | 5,28 | B1 | 12,5 | 77 | 83 | 87 | 88 |
| 41 | V | V | A3 | 12,5 | A | 69,72 | A | 5,28 | B1 | 12,5 | 78 | 82 | 84 | 86 |

Auch eine zusätzliche zweite Mahlungen wie sie in den Test 36 bis 41 unter 10 bar CO₂ Atmosphäre im Zuge der Konditionierung für Konverterschlacke bzw. Portlandzementklinker durchgeführt wurde, führen nicht zu signifikant erhöhten Festigkeiten.

**Tabelle 11: Test 42 bis 45**

| | | | Elektroofenschlacke | | Portlandzementklinker | | Gips | | Hüttensand | | Aktivitätsindex | | | |
|---|---|---|---|---|---|---|---|---|---|---|---|---|---|---|
| Test | D₁₀ µm | D₈₀ µm | Art | Menge [M.%] | Art | Menge [M.%] | Art | Menge [M.%] | Art | Menge [M.%] | 7 d | 28 d | 56 d | 90 d |
| 42 | V | V | | 0 | A | 70,48 | A | 4,52 | C | 25 | 77 | 100 | 102 | 104 |
| 43 | V | V | | 0 | A | 70,48 | A | 4,52 | C | 25 | 78 | 97 | 102 | 106 |
| 44 | V | V | E | 25 | A | 68,97 | A | 6,03 | | 0 | 63 | 63 | 45 | 36 |
| 45 | V | V | F | 25 | A | 68,97 | A | 6,03 | | 0 | 78 | 79 | 80 | 74 |

Die Ergebnisse der Tests 42 bis 45 zeigen, dass die Alterung von Schlacken, insbesondere Elektroofenschlacke und Hüttensand, im Zuge der Vorkonditionierung nicht zu signifikant abweichenden Festigkeiten führt. Die für die Tests verwendete Elektroofenschlacke sowie der Hüttensand wurden zur Alterung unter freiem Himmel auf einer Deponie für mindestens 5 Jahre gelagert.

**Tabelle 12: Test 46 bis 61**

| | | | Konverterschlacke | | Elektroofenschlacke | | Portlandzementklinker | | Gips | | Aktivitätsindex | | | |
|---|---|---|---|---|---|---|---|---|---|---|---|---|---|---|
| Test | D₁₀ µm | D₈₀µm | Art | Menge [M.%] | Art | Menge [M.%] | Art | Menge [M.%] | Art | Menge [M.%] | 7 d | 28 d | 56 d | 90 d |
| 46 | V | V | F | 25 | | 0 | A | 68,97 | A | 6,03 | 82 | 78 | 77 | 78 |
| 47 | V | V | G | 25 | | 0 | A | 68,97 | A | 6,03 | 82 | 79 | 82 | 81 |
| 48 | V | V | A5 | 25 | | 0 | A | 68,97 | A | 6,03 | 89 | 85 | 90 | 95 |
| 49 | V | V | A5 | 25 | | 0 | A | 68,97 | A | 6,03 | 91 | 88 | 94 | 99 |
| 50 | V | V | H | 25 | | 0 | A | 68,97 | A | 6,03 | 80 | 82 | 84 | 87 |
| 51 | V | V | A6 | 25 | | 0 | A | 68,97 | A | 6,03 | 79 | 82 | 94 | 89 |
| 52 | V | V | A7 | 25 | | 0 | A | 68,97 | A | 6,03 | 80 | 88 | 92 | 93 |
| 53 | V | V | A8 | 25 | | 0 | A | 68,97 | A | 6,03 | 79 | 84 | 82 | 86 |
| 54 | V | V | A9 | 25 | | 0 | A | 68,97 | A | 6,03 | 76 | 82 | 86 | 85 |
| 55 | V | V | A10 | 25 | | 0 | A | 68,97 | A | 6,03 | 65 | 78 | 78 | 76 |
| 56 | V | V | I | 25 | | 0 | A | 68,97 | A | 6,03 | 76 | 77 | 59 | 75 |
| 57 | V | V | J | 25 | | 0 | A | 68,97 | A | 6,03 | 83 | 93 | 93 | 91 |
| 58 | V | V | | | G | 25 | A | 68,97 | A | 6,03 | 74 | 78 | 76 | 78 |
| 59 | V | V | | | H | 25 | A | 68,97 | A | 6,03 | 74 | 79 | 78 | 80 |
| 60 | V | V | K | 25 | | 0 | A | 68,97 | A | 6,03 | 74 | 77 | 81 | 79 |
| 61 | V | V | L | 25 | | 0 | A | 68,97 | A | 6,03 | 81 | 88 | 89 | 86 |

Vergleichende Analysen der Tests 46 bis 61 von Zementmischungen mit Konverterschlacken und Elektroofenschlacken unterschiedlicher Provenienz zeigen, dass bei gleicher Aufbereitungsmethodik, mit erfindungsgemäßer Korngrößenverteilungen im Endprodukt ein Einfluss der Schlackeprovenienz gegeben ist.

**Tabelle 13: Tests 62 bis 67**

| | | | Konverterschlacke | | Elektroofenschlacke | | Portlandzementklinker | | Gips | | Puzzolane | | Aktivitätsindex | | | |
|---|---|---|---|---|---|---|---|---|---|---|---|---|---|---|---|---|
| Test | D₁₀ µm | D₈₀ µm | Art | M.% | Art | M.% | Art | M.% | Art | M.% | Art | M.% | 7 d | 28 d | 56 d | 90 d |
| 62 | V | V | A5 | 12,5 | E | 12,5 | A | 68,97 | A | 6,03 | | 0 | 71 | 77 | 78 | 76 |
| 63 | V | V | A5 | 12,5 | F | 12,5 | A | 68,97 | A | 6,03 | | 0 | 86 | 82 | 83 | 79 |
| 64 | V | V | A5 | 18,75 | E | 6,25 | A | 68,97 | A | 6,03 | | 0 | 88 | 89 | 85 | |
| 65 | V | V | A5 | 18,75 | F | 6,25 | A | 68,97 | A | 6,03 | | 0 | 85 | 89 | 85 | |
| 66 | V | V | A5 | 20 | | 0 | A | 69,27 | A | 5,73 | B2 | 5 | 85 | 84 | 90 | 91 |
| 67 | V | V | A5 | 5 | | 0 | A | 70,18 | A | 4,82 | B2 | 20 | 81 | 84 | 89 | 93 |

Zementmischungen aus Konverterschlacken und Elektroofenschlacken bzw. Konverterschlacken und Puzzolanen mit erfindungsgemäßer Korngrößenverteilungen im Endprodukt zeigen optimierte Festigkeitsverläufe. Diese sind auf die Vorkonditionierung und Konditionierung zurückzuführen.

**Tabelle 14: Test 68 bis 80**

| | | | Konverterschlacke | | Portlandzementklinker | | Gips | | Puzzolane | | Aktivitätsindex | | | | | |
|---|---|---|---|---|---|---|---|---|---|---|---|---|---|---|---|---|
| Test | D₁₀ µm | D₈₀ µm | Art | Menge [M.%] | Art | Menge [M.%] | Art | Menge [M.%] | Art | Menge [M.%] | 1d | 2d | 7 d | 28 d | 56 d | 90 d |
| 68 | 2,68 | 55,5 | A11 | 25 | A | 68,97 | A | 6,03 | | 0 | 41 | 56 | 74 | 79 | 80 | 86 |
| 69 | 2,53 | 59,1 | A11 | 25 | A | 68,97 | A | 6,03 | | 0 | 41 | 56 | 81 | 84 | 85 | 89 |
| 70 | 2,77 | 60,8 | A11 | 25 | A | 68,97 | A | 6,03 | | 0 | 44 | 52 | 74 | 83 | 87 | 86 |
| 71 | 2,33 | 55,3 | A11 | 25 | A | 68,97 | A | 6,03 | | 0 | 41 | 56 | 78 | 86 | 87 | 90 |
| 72 | 2,52 | 46,6 | A11 | 25 | A | 68,97 | A | 6,03 | | 0 | 58 | 58 | 75 | 80 | 85 | 88 |
| 73 | 1,76 | 30,3 | | | A | 70,48 | A | 4,52 | B3 | 25 | 63 | 68 | 79 | 86 | 88 | 85 |
| 74 | 1,80 | 33,4 | | | A | 70,48 | A | 4,52 | B3 | 25 | 69 | 77 | 85 | 89 | 93 | 90 |
| 75 | 1,84 | 38,8 | | | A | 70,48 | A | 4,52 | B3 | 25 | 68 | 75 | 83 | 90 | 92 | 90 |
| 76 | 1,77 | 38,4 | A11 | 12,5 | A | 69,72 | A | 5,28 | B3 | 12,5 | 64 | 69 | 76 | 71 | | 83 |
| 77 | 1,87 | 38,7 | A11 | 12,5 | A | 69,72 | A | 5,28 | B3 | 12,5 | 65 | 71 | 77 | 86 | | 84 |
| 78 | 1,85 | 38,6 | A11 | 12,5 | A | 69,72 | A | 5,28 | B3 | 12,5 | 63 | 70 | 78 | 83 | | 86 |
| 79 | 1,87 | 38,3 | A11 | 12,5 | A | 69,72 | A | 5,28 | B3 | 12,5 | 67 | 71 | 79 | 86 | | 87 |
| 80 | 1,82 | 34,6 | A11 | 12,5 | A | 69,72 | A | 5,28 | B3 | 12,5 | 64 | 72 | 77 | 76 | | 87 |

Die Tests 68 bis 80 zeigen, dass die erfindungsgemäßen optimierten Korngrößenverteilungen durch entsprechende Vorkonditionierung und Konditionierung der Konverterschlacke sowie der weiteren Mahlungspartner erreicht werden können, und folglich bevorzugenswerte Festigkeitsentwicklungen erzielt werden können.

**Tabelle 15: Test 83 bis 86**

| | | | Konverterschlacke | | Portlandzementklinker | | Gips | | Puzzolane | | Aktivitätsindex | | | | |
|---|---|---|---|---|---|---|---|---|---|---|---|---|---|---|---|
| Test | D₁₀ µm | D₈₀ µm | Art | Menge [M.%] | Art | Menge [M.%] | Art | Menge [M.%] | Art | Menge [M.%] | 1d | 2d | 7 d | 28 d | 90 d |
| 83 | 1,79 | 37,4 | A11 | 12,5 | A | 69,72 | A | 5,28 | B3 | 10 | 54 | 67 | 81 | 91 | 96 |
| 84 | 1,67 | 32,8 | A11 | 12,5 | A | 69,72 | A | 5,28 | B3 | 8,75 | 50 | 63 | 83 | 93 | 97 |
| 85 | 1,56 | 35,1 | A11 | 12,5 | A | 69,72 | A | 5,28 | B3 | 8,75 | 46 | 61 | 81 | 92 | 92 |
| 86 | 1,46 | 28,5 | A11 | 12,5 | A | 69,72 | A | 5,28 | B3 | 7,5 | 50 | 64 | 81 | 94 | 97 |

Zusätzlich zu den in der vorstehend angeführten Tabelle Zusammensetzung der Zementmischung ist in Test 83 2,5 Masse-%, in Test 84 und Test 85 3,75 Masse-% Asche der Art C und in Test 86 5 Masse-% der Asche der Art D enthalten.

Die Tests 83 bis 86 zeigen, dass die Zumischung von Flugaschen im Zuge der Vorkonditionierung vor der Mahlung zu Konverterschlacken - Puzzolan Verschnitten die Korngrö-βenverteilung verbessert und somit die Festigkeitsentwicklung der Zementmischungen optimiert wird.

**Tabelle 16: Test 89 bis 104**

| | | | Konverterschlacke | | Portlandzementklinker | | Gips | | Puzzolane | | Aktivitätsindex | | | | |
|---|---|---|---|---|---|---|---|---|---|---|---|---|---|---|---|
| Test | D₁₀ µm | D₈₀ µm | Art | Menge [M.%] | Art | Menge [M.%] | Art | Menge [M.%] | Art | Menge [M.%] | 1d | 2d | 7 d | 28 d | 90 d |
| 89 | 1,91 | 39,9 | A11 | 12,5 | A | 69,72 | A | 5,28 | B3 | 12,5 | 65 | 74 | 80 | 86 | 89 |
| 90 | 1,88 | 39,6 | A11 | 12,5 | A | 69,72 | A | 5,28 | B3 | 12,5 | 64 | 72 | 80 | 92 | 94 |
| 91 | 1,87 | 39,6 | A11 | 12,5 | A | 69,72 | A | 5,28 | B3 | 12,5 | 66 | 74 | 80 | 91 | 91 |
| 92 | 1,82 | 38,7 | A11 | 12,5 | A | 69,72 | A | 5,28 | B3 | 12,5 | 67 | 76 | 80 | 90 | 88 |
| 93 | 1,94 | 39,8 | A11 | 12,5 | A | 69,72 | A | 5,28 | B3 | 12,5 | 64 | 71 | 73 | 86 | 89 |
| 94 | 1,87 | 39,8 | A11 | 12,5 | A | 69,72 | A | 5,28 | B3 | 12,5 | 69 | 74 | 80 | 91 | 92 |
| 95 | 1,91 | 39,0 | A11 | 12,5 | A | 69,72 | A | 5,28 | B3 | 12,5 | 63 | 77 | 79 | 89 | 90 |
| 96 | 2,47 | 38,7 | A11 | 12,5 | A | 69,72 | A | 5,28 | B3 | 12,5 | 64 | 72 | 78 | 81 | 90 |
| 97 | 1,83 | 38,5 | A11 | 12,5 | A | 69,72 | A | 5,28 | B3 | 12,5 | 68 | 77 | 86 | 92 | 96 |
| 98 | 1,79 | 39,7 | A11 | 12,5 | A | 69,72 | A | 5,28 | B3 | 12,5 | 68 | 77 | 81 | 89 | 95 |
| 99 | 1,81 | 48,1 | A11 | 12,5 | A | 69,72 | A | 5,28 | B3 | 12,5 | 65 | 74 | 77 | 92 | 96 |
| 100 | 1,91 | 40,1 | A11 | 12,5 | A | 69,72 | A | 5,28 | B3 | 12,5 | 65 | 73 | 74 | 86 | 88 |
| 101 | 1,90 | 38,8 | A11 | 12,5 | A | 69,72 | A | 5,28 | B3 | 12,5 | 64 | 72 | 76 | 89 | 91 |
| 102 | 1,94 | 38,7 | A11 | 12,5 | A | 69,72 | A | 5,28 | B3 | 12,5 | 61 | 70 | 72 | 87 | 89 |
| 103 | 1,97 | 39,2 | A11 | 12,5 | A | 69,72 | A | 5,28 | B3 | 12,5 | 61 | 71 | 73 | 88 | 93 |
| 104 | 2,11 | 37,9 | A11 | 12,5 | A | 69,72 | A | 5,28 | B3 | 12,5 | 59 | 68 | 76 | 84 | 89 |

Umfangreiche Optimierungsversuche zur Verbesserung der Korngrößenverteilungen wurden durchgeführt, welche in den Tests 89 bis 104 dargestellt sind. Optimierte Eigenschaften wurden dabei in den Tests 94 und 97 festgestellt, welche auf optimierte Vorkonditionierung und Konditionierung zurückzuführen sind.

Die optimierte Vorkonditionierung erfolgte dabei durch gezieltes Brechen und Sieben und die Entfernung von magnetisierbaren Fraktionen. Das Brechen und Sieben der Konverterschlacke erfolgte über ein Sieb mit einer nominellen Maschenweite von 7 mm. Die Portlandzementklinkerfraktion wurde separat über ein Sieb mit einer nominellen Maschenweite von 14 mm aufbereitet. Die optimierte Konditionierung der Konverterschlacke erfolgte gemeinsam mit dem Zementklinker, dem Gips sowie dem Puzzolan in einer Kugelmühle mit einer installierten Leistung von 2500 kW in industriellem Maßstab. Die exakte Einstellung der finalen Produktkorngrößenverteilung erfolgte dabei im Zusammenspiel mit einem Hochleistungs-Windsichter. Das Endprodukt zeigte optimale Eigenschaften bei einem D₈₀ Perzentil im Bereich von 38,5 µm bis 39,8 µm.

**Tabelle 17: Test 105 bis 112**

| | | | Konverterschlacke | | Portlandzementklinker | | Gips | | Puzzolane | | Aktivitätsindex | | | | |
|---|---|---|---|---|---|---|---|---|---|---|---|---|---|---|---|
| Test | D₁₀ µm | D₈₀ µm | Art | Menge [M.%] | Art | Menge [M.%] | Art | Menge [M.%] | Art | Menge [M.%] | 1d | 2d | 7 d | 28 d | 90 d |
| 105 | 1,74 | 32,7 | A11 | 12,5 | A | 69,72 | A | 5,28 | B3 | 12,5 | 62 | 71 | 75 | 88 | 92 |
| 106 | 1,94/1,89 | 38,5/34,5 | A11 | 12,5 | A | 69,72 | A | 5,28 | B3 | 12,5 | 62 | 69 | 76 | 85 | 89 |
| 107 | 1,81/1,83 | 33,1/33,5 | A11 | 12,5 | A | 69,72 | A | 5,28 | B3 | 12,5 | 63 | 73 | 76 | 85 | 89 |
| 108 | 2,01 | 37,4 | A11 | 12,5 | A | 69,72 | A | 5,28 | B3 | 12,5 | 66 | 74 | 77 | 85 | 92 |
| 109 | 9,78 | 30,2 | A11 | 12,5 | A | 69,72 | A | 5,28 | B3 | 12,5 | 59 | 71 | 72 | 81 | 89 |
| 110 | 5,22 | 38,5/34,5 | A11 | 12,5 | A | 69,72 | A | 5,28 | B3 | 12,5 | 56 | 65 | 67 | 76 | 80 |
| 111 | 9,83 | 33,1/33,5 | A11 | 12,5 | A | 69,72 | A | 5,28 | B3 | 12,5 | 55 | 66 | 71 | 77 | 82 |
| 112 | 7,72 | 30,5 | A11 | 12,5 | A | 69,72 | A | 5,28 | B3 | 12,5 | 56 | 67 | 71 | 77 | 83 |

Zur Verifizierung der Ergebnisse der Tests 89 bis 104, wo die Mahlung mit einer Kugelmühle erfolgte und anschließend eine erfindungsgemäße Sichtung durchgeführt wurde, wurden Mahlaggregate ohne nachfolgende Sichtung eingesetzt, wobei keine ausreichenden Produkteigenschaften erzielt werden konnten.

**Tabelle 18: Test 113 bis 117**

| | | | Konverterschlacke | | Portlandzementklinker | | Gips | | Kalksteinmehl | | Puzzolane | | Aktivitätsindex | | | |
|---|---|---|---|---|---|---|---|---|---|---|---|---|---|---|---|---|
| Test | D₁₀ µm | D₈₀ µm | Art | M.% | Art | M.% | Art | M.% | Art | M.% | Art | M.% | 1 d | 2 d | 7d | 28d |
| 113 | V | V | A11 | 10 | A | 69,87 | A | 5,13 | C | 5 | B3 | 10 | 57 | 61 | 73 | 80 |
| 114 | V | V | A11 | 10 | A | 69,87 | A | 5,13 | D | 5 | B3 | 10 | 52 | 60 | 75 | 80 |
| 115 | V | V | A11 | 10 | A | 69,87 | A | 5,13 | E | 5 | B3 | 10 | 54 | 61 | 74 | 82 |
| 116 | 1,84 | 38,9 | A12 | 11,25 | A | 69,8 | A | 5,2 | F | 2,5 | B4 | 11,25 | 69 | 78 | 81 | 87 |
| 117 | 2,18 | 29,4 | A12 | 11,25 | A | 69,8 | A | 5,2 | G | 2,5 | B4 | 11,25 | 72 | 79 | 79 | 88 |

**Tabelle 19: Test 118 bis 124**

| | | | Konverterschlacke | | Portlandzementklinker | | Gips | | Puzzolane | | Aktivitätsindex | | | |
|---|---|---|---|---|---|---|---|---|---|---|---|---|---|---|
| Test | D₁₀ µm | D₈₀ µm | Art | Menge [M.%] | Art | Menge [M.%] | Art | Menge [M.%] | Art | Menge [M.%] | 1d | 2d | 7d | 28 d |
| 118 | V | V | A12 | 10 | A | 74,57 | A | 5,43 | B4 | 10 | 81 | 79 | 87 | 99 |
| 119 | V | V | A12 | 15 | A | 64,87 | A | 5,13 | B4 | 15 | 67 | 66 | 79 | 100 |
| 120 | V | V | A12 | 20 | A | 55,18 | A | 4,82 | B4 | 20 | 52 | 53 | 63 | 95 |
| 121 | V | V | A12 | 25 | A | 45,48 | A | 4,52 | B4 | 25 | 33 | 39 | 54 | 85 |
| 122 | V | V | A12 | 30 | A | 35,78 | A | 4,22 | B4 | 30 | 19 | 22 | 39 | 75 |
| 123 | V | V | A12 | 35 | A | 26,08 | A | 3,92 | B4 | 35 | 8 | 8 | 21 | 42 |
| 124 | V | V | A12 | 40 | A | 16,38 | A | 3,62 | B4 | 40 | 4 | 3 | 10 | 25 |

Die Tests 118 bis 124 zeigen, dass mit einer erfindungsgemäßen Zementmischung mit ansteigendem Mengenanteil von Konverterschlacke und puzzolanischem Additiv und gleichzeitiger Abnahme des Mengenanteils von Portlandzementklinker gute Werte für die 28 Tage Frühfestigkeit erzielt werden können. Durch die erfindungsgemäße Zementmischung werden selbst bei Konverterschlacke- und Puzzolanmengenanteil von jeweils 40 Masse-% und folglich sehr geringem Portlandzementklinkeranteil noch sehr gute 28 Tage Aktivitätswerte erreicht.

Zur Optimierung des Kornbandes wurden Kalksteine unterschiedlichen Ursprungs und unterschiedlicher Qualität im Zuge der Konditionierung zur Zementmischung zugegeben, wobei festgestellt wurde, dass sich die Produkteigenschaften kaum verändern, jedoch die Frühfestigkeiten teilweise angehoben wurden.

Die Tests zeigen, dass durch erfindungsgemäße Zementmischungen der Anteil an Portlandzementklinker reduziert werden kann und durch Konverterschlacke und/oder andere Additive ersetzt werden kann ohne die Qualität, insbesondere die Festigkeit bei einem Alter von 28 Tagen von Beton, merklich zu beeinflussen, und dabei gleichzeitig den CO₂-Fußabdruck deutlich zu verringern und somit eine nachhaltige Herstellung von Baustoffen zu ermöglichen.

### Beispiel 1: Verfahren zur Herstellung der Zementmischung

### 1. Lagerung der Vorprodukte

Für die Herstellung der Zementmischung werden verschiedene puzzolanische, oder latent hydraulische Rohstoffe verarbeitet. Um die Produkte von Umwelteinflüssen insbesondere Regen und Wind (Staubemissionen) zu schützen, werden die Ausgangsrohstoffe in überdachten Lagerboxen für die Aufbereitungsanlage gelagert.

### 2. Voraufbereitung

Mittels Radlader werden die Rohstoffe aus den jeweiligen Boxen zu der Aufbereitungsanlage transportiert. Der erste Schritt der Aufbereitung umfasst das Brechen und Sieben der Rohstoffe auf unterschiedlichen Linien. Die erste Linie besteht aus einem Kegelbrecher (Metso GP220) und Spannwellensieb (Binder Bivitec) und ist für harte, nicht bindige Materialien (Schlacke, Klinker,..) geeignet. Die zweite Linie ist für bindige und weichere Materialen (Tuff, Asche,...) ausgelegt. Beide Linien sind mit getrennten Aufgabebunkern ausgestattet, aus denen das Aufgabematerial kontinuierlich dosiert wird. Durch die Voraufbereitung wird die Korngröße für die nachfolgenden Prozesse reduziert ("Vorkonditionierung"). Ausgehend von den jeweiligen Eigenschaften der Rohstoffe (=Ausgangsmaterialien) wird die Vorkonditionierung entsprechend angepasst. Dadurch kann eine gezielte Kornverteilung des Endproduktes durch Mahlung in der Kugelmühle erreicht werden.

### 3. Trocknung

Je nach Feuchtegehalt des Aufgabematerials können die gebrochenen und gesiebten Produkte beider Aufgabelinien separat getrocknet werden. Die Umschaltung erfolgt durch den Anlagenfahrer aus dem Prozessleitstand. Dazu wird das Material auf einen Fließbetttrockner (Binder Dryon) aufgegeben, mittels Heißgas auf eine Produktfeuchte <1% getrocknet und in Vorhaltesilos der Mahlanlage gelagert.

Ist die Aufgabefeuchte geringer als gefordert, kann die Trocknung umgangen werden und das Material wird direkt in die Vorhaltesilos gefördert.

### 4. Zwischenlagerung

Die getrockneten Ausgangsmaterialien werden in dafür ausgelegte Stahlsilos zwischengelagert.

### 5. Mahlung

Aus den Vorhaltesilos der Mahlanlage wird das Material in die Kugelmühle (CEMTEC BM3.8/11.5) aufgegeben. Jeder Silo ist mit einem Wiegeband ausgestattet, sodass eine exakte Zusammensetzung des Produktes gewährleistet ist. In der Kugelmühle wird das Material auf eine Pulverfeinheit zerkleinert und anschließend in einem Sichter in ein Grobgut und Feingut getrennt. Das Feingut entspricht dem finalen Produkt und kann bevor es im Fertigproduktsilo gelagert wird, auf eine niedrigere Temperatur gekühlt werden. Das Grobgut, welches noch nicht den Anforderungen der Endfeinheit entspricht, wird nochmals in die Kugelmühle zurückgefördert und durchläuft den Mahlprozess ein weiteres Mal.

### 6. Kühlung

Durch eine indirekte Kühlung wird die Produkttemperatur von ca. 90°C auf maximal 60°C reduziert. Der indirekte Kühlkreislauf besteht aus einer Kühlflüssigkeit, welche durch Kontaktplatten vom Produkt getrennt ist. Die erwärmte Flüssigkeit wird durch einen Wasser-Luft-Wärmetauscher rückgekühlt und somit im Kreislauf geführt.

### 7. Produktlagerung

Die Fertigprodukte werden in Betonsilos für den Versand gelagert. Aus den Lagersilos wird das Produkt direkt in Silo-LKW verladen. Sowohl Erst- als auch Zweitwiegung erfolgen vollautomatisch sobald der LKW in das Silo ein- bzw. ausfährt.

### 8. Produktqualität

In der Produktionskontrolle wird laufend die Einhaltung der wesentlichen Parameter kontrolliert. Mit statistischen Methoden erfolgt eine Auswertung der Prüfungen und die Ergebnisse fließen laufend in den Produktionsprozess ein.

Die Ausführungsbeispiele zeigen bzw. beschreiben mögliche Ausführungsvarianten der Zementmischung, wobei an dieser Stelle bemerkt sei, dass auch Kombinationen der einzelnen Ausführungsvarianten untereinander möglich sind.

## Patentansprüche

1. Zementmischung umfassend Portlandzementklinker und Konverterschlacke, **dadurch gekennzeichnet, dass** gemahlener Portlandzementklinker in einer Menge von mindestens 20 Masse-% und gemahlene Konverterschlacke und/oder Elektroofenschlacke in einer Menge von mindestens 5 Masse-% enthalten ist, und die vorkonditionierte und konditionierte gemahlene Konverterschlacke und/oder Elektroofenschlacke eine Partikelgrößenverteilung **gekennzeichnet durch** einen Partikeldurchmesser D₁₀ zwischen 0,5 µm und 30 µm und einen Partikeldurchmesser D₈₀ zwischen 5 µm und 100 µm aufweist.

2. Zementmischung nach Anspruch 1, **dadurch gekennzeichnet, dass** der gemahlene Portlandzementklinker eine Partikelgrößenverteilung **gekennzeichnet durch** einen Partikeldurchmesser D₁₀ zwischen 0,5 µm und 10 µm und einen Partikeldurchmesser D₈₀ zwischen 4 µm und 80 µm aufweist.

3. Zementmischung nach Anspruch 1 oder 2, **dadurch gekennzeichnet, dass** die gemahlene Zementmischung eine Partikelgrößenverteilung **gekennzeichnet durch** einen Partikeldurchmesser D₁₀ zwischen 0,5 µm und 25 µm und einen Partikeldurchmesser D₈₀ zwischen 4,75 µm und 95 µm aufweist.

4. Zementmischung nach zumindest einem der Ansprüche 1 bis 3, **dadurch gekennzeichnet, dass** zumindest ein Sulfatträger in einer Menge von 1 bis 12 Masse-% enthalten ist, wobei der Sulfatträger ausgewählt aus einer Gruppe umfassend oder bestehend aus Anhydrit, Bassanit, Gips oder eine Mischung daraus ist.

5. Zementmischung nach zumindest einem der Ansprüche 1 bis 4, **dadurch gekennzeichnet, dass** zumindest ein puzzolanisches Additiv ausgewählt aus einer Gruppe umfassend oder bestehend aus Asche, Tuffe, Tuffite, Trass, Ziegel, Perlit, Zeolith, calcinierteTone, Glas oder eine Mischung daraus enthalten ist.

6. Zementmischung nach zumindest einem der Ansprüche 1 bis 5, **dadurch gekennzeichnet, dass** zumindest ein latent-hydraulisches Additiv ausgewählt aus einer Gruppe umfassend Baurestmassen und/oder Hüttensand oder eine Mischung daraus enthalten ist.

7. Verwendung der Zementmischung nach zumindest einem der Ansprüche 1 bis 6 zur Herstellung von Baustoffen, wie Beton, insbesondere von Ortbeton oder Betonfertigteilen, Mörteln und Fugenmörteln, Estrichen, Betonsteinen, sowie von hydraulisch gebundenen Schüttmaterialien und/oder hydraulisch gebundener Tragschichten.

8. Betonzusammensetzung umfassend eine Zementmischung nach zumindest einem der Ansprüche 1 bis 6, Zuschlagstoffe und Wasser.

9. Verfahren zur Herstellung einer Zementmischung aus Ausgangsmaterialien, wobei erstarrte Konverterschlacke und/oder Elektroofenschlacke und/oder Portlandzementklinker zerkleinert wird, **dadurch gekennzeichnet, dass** Konverterschlacke und/oder Elektroofenschlacke und Portlandzementklinker vorkonditioniert und konditioniert werden, indem Konverterschlacke und/oder Elektroofenschlacke mittels Grobzerkleinerung und Grobkorngrößentrennung auf Partikel mit einem Äquivalentdurchmesser von 1 mm bis 100 mm zerkleinert werden und gegebenenfalls gleichzeitig oder nachfolgend metallische Fraktionen abgetrennt werden, und Portlandzementklinker mittels Grobzerkleinerung und Grobkorngrößentrennung auf Partikel mit einem Äquivalentdurchmesser von 1 mm bis 60 mm zerkleinert werden und die zerkleinerte Konverterschlacke und/oder Elektroofenschlacke auf eine Partikelgrößenverteilung **gekennzeichnet durch** einen Partikeldurchmesser D₁₀ zwischen 0,5 µm und 30 µm und einen Partikeldurchmesser D₈₀ zwischen 5 µm und 100 µm gemahlen wird.

10. Verfahren nach Anspruch 9, **dadurch gekennzeichnet, dass** in der Zementmischung mindestens 5 Masse-% Konverterschlacke und/oder Elektroofenschlacke und mindestens 20 Masse-% Portlandzementklinker vermengt werden.

11. Verfahren nach Anspruch 9 oder 10, **dadurch gekennzeichnet, dass** Konverterschlacke und/oder Elektroofenschlacke mit einer spezifischen Dichte von weniger als 5000 kg/m³ vermahlen wird.

12. Verfahren nach zumindest einem der Ansprüche 9 bis 11, **dadurch gekennzeichnet, dass** ein Sulfatträger nach Anspruch 4 und/oder puzzolanisches Additiv nach Anspruch 5 und/oder ein latent-hydraulisches Additiv nach Anspruch 6 im Zuge der Vorkonditionierung oder Konditionierung oder auch danach mit der Konverterschlacke und/oder Elektroofenschlacke und dem Portlandzementklinker vermengt wird/werden.
